# EUROPEAN PATENT SPECIFICATION

(11) **EP 2 527 292 B1**
(45) Date of publication and mention of the grant of the patent: **17.08.2016**
(21) Application number: 10707061.7
(22) Date of filing: 21.01.2010
(51) Int. Cl.: B01J 37/18, B01J 37/02, B01J 23/89, C01B 3/32

(54) **CATALYSTS FOR THE OXIDATIVE REFORMING OF ALCOHOLS**
KATALYSATOREN ZUR OXIDATIVEN REFORMIERUNG VON ALKOHOLEN
CATALYSEURS POUR LE REFORMAGE OXYDATIF D'ALCOOLS

(43) Date of publication of application: 28.11.2012
(73) Proprietor: Acciona Biocombustibles, S.A., 31621 Sarriguren (Navarra) (ES)
(72) Inventor: CARRILERO BORBUJO, Isabel, 31621 Sarriguren (Navarra) (ES); GUELBENZU MICHELENA, Eugenio, 31621 Sarriguren (Navarra) (ES); HOMS MARTÍ, Narciso, 08028 Barcelona (ES); RAMÍREZ DE LA PISCINA MILLÁN, Pilar, 08028 Barcelona (ES); ARGUDO MOYA, Marco Antonio, 08028 Barcelona (ES)
(74) Representative: Pons
(86) International application number: PCT/ES2010/070034
(87) International publication number: WO 2011/089279

(56) References cited:
- EP-A1- 0 487 514
- EP-A1- 1 138 383
- US-A- 3 334 055
- US-A- 4 199 436
- US-A1- 2003 153 455
- Adhikari S et al.: "Production of hydrogen by steam reforming of glycerin over alumina supported metal catalysts", Internet Catalysis Today, vol. 129 29 September 2007 (2007-09-29), pages 355-364, XP002603989, DOI: 10.1016/j.cattod.2006.09.038 [retrieved on 2010-10-06]
- Dimitris K. Liguras, Dimitris I. Kondarides and Xenophon E. Verykios: "Production of hydrogen for fuel cells by steam reforming of ethanol over supported noble metal catalysts", Internet Applied Catalysis B: Environmental, vol. 43 25 July 2003 (2003-07-25), pages 345-354, XP002603990, Internet DOI: 10.1016/S0926-3373(02)00327-2 [retrieved on 2010-10-06]
- FATSIKOSTAS A N ET AL: 'Production of hydrogen for fuel cells by reformation of biomass-derived ethanol' CATALYSIS TODAY vol. 75, no. 1-4, 03 July 2002, ELSEVIER, NL, pages 145 - 155, XP008119353 DOI: 10.1016/S0920-5861(02)00057-3 ISSN: 0920-5861
- HARYANTO A ET AL: "Current status of hydrogen production techniques by steam reforming of ethanol: A review", ENERGY & FUELS, AMERICAN CHEMICAL SOCIETY, WASHINGTON, DC, US, vol. 19, no. 5, 1 September 2005 (2005-09-01), pages 2098-2106, XP002545565, ISSN: 0887-0624, DOI: 10.1021/EF0500538 [retrieved on 2005-07-30]
- MARINO F ET AL: "Hydrogen production from steam reforming of bioethanol using Cu/Ni/K/gamma-Al2O3 catalysts. Effect of Ni", INTERNATIONAL JOURNAL OF HYDROGEN ENERGY, ELSEVIER SCIENCE PUBLISHERS B.V., BARKING, GB, vol. 26, no. 7, 1 July 2001 (2001-07-01), pages 665-668, XP004250283, ISSN: 0360-3199, DOI: 10.1016/S0360-3199(01)00002-7

## Description

The present invention relates to catalysts useful for reforming or synthesis reactions of higher alcohols, and in particular for the oxidative reforming of alcohols, such as, for example, ethanol and glycerol, for which reason it belongs to the field of invention of metal catalysts that operate in heterogeneous phase.

### STATE OF THE PRIOR ART

The constant increase in energy demand, as well as the rise in oil prices and the exhausting of its reserves, have meant that obtaining fuels and chemical products from renewable sources is crucial.

The use of fuels derived from biomass contributes to reducing dependency on oil, improving air quality and mitigating the effects of global warming by reducing CO₂ emissions as well as improving agrarian economies.

So that the production of biomass, bioalcohols and biodiesel is even more competitive, it is convenient to reuse its by-products and a way of doing this is by producing hydrogen from them.

Hydrogen is used as raw material in multiple chemical syntheses such as fertilizer manufacturing, metal annealing, production of electronic materials, vitamins, cosmetic products, soaps, lubricants or in the supply industry. Hydrogen is also an energy vector that can be used for storage or transmission of energy. It is particularly interesting for storing the energy produced from renewable sources since it helps their management.

Hydrogen is a very versatile fuel which can be stored and transported in pressurized containers or by gas pipelines until their place of use. It is foreseen that in the near future, with the implementation of fuel cell technology, hydrogen is used in domestic and motor vehicle uses as a very clean fuel since it does not produce CO₂ and this technology is very energy efficient.

When hydrogen is produced from renewable sources such as by-products of biomass, bioalcohols or biodiesel it is a clean substitute for fossil fuels. In the specific case of biodiesel, it is currently produced by means of the transesterification of vegetable oils. One of the greatest drawbacks of this method is that for each ton of biodiesel produced around 100 kg of glycerol are produced, which reduces the economic yield of the process. The use of this by-product by transforming it into hydrogen substantially improves said yield.

The transformation of glycerol to hydrogen has been described using very costly platinum catalysts. More recently, effective catalysts of non-precious metals have been described. The processes described are performed at high temperature, for example with Ni catalysts as described in Energy & Fuels, 21 (2007) 3459-3504 at a temperature of around 800°C, generating hydrogen and carbon dioxide with a commercial catalyst. Although in laboratory tests yields of 65% hydrogen over the maximum expected theoretical were obtained, the process was analysed in short reaction times and has some drawbacks for its industrial scaling such as high temperatures necessary.

Ir, Co and Ni catalysts supported on cerium are also described for hydrogen production reactions from reforming reactions with glycerol and ethanol steam in the International Journal of Hydrogen Energy 32 (2007) 2367-2373, where glycerol/water ratios of 2/18 molar are used. It also describes the effect of the active metal, finding that Ir is the best and the effect of the reaction temperature in selectivity towards hydrogen (S(H₂)) and the% of conversion of the reagents. Ni-based catalysts supported on MgO, CeO₂ or TiO₂ for hydrogen production reactions from reforming reactions of glycerol steam are studied in Renewable Energy, 33 (2008) 1097-1100. It also describes the effect of the reaction temperature on selectivity towards hydrogen (S(H₂)) and the% of conversion of the glycerol. In both cases the reactions are only carried out with steam for which reason the necessary reaction temperature is very high, the quantity of water to be vaporized is high and the coke deposition abundant

Pt-based catalysts supported on Al₂O₃, ZrO₂, CeO₂/ZrO₂ or MgO/ZrO₂ in a liquid phase process and at a low temperature, are used with the main objective of obtaining fuels and chemical products from glycerol. The process is manipulating liquids and under pressure. (Angew. Chem. Int. Ed. 2006, 45, 3982-3985).

Cobalt-ruthenium catalysts without platinum are used to generate hydrogen, as disclosed in US 2006280677 A1. This patent application discloses a process for producing gas rich in hydrogen from CO and H₂O (syngas) by the displacement reaction of gas from water.

Another document, US 2008265212 A1, discloses catalysts based on Rh and Ni, their manufacturing and their uses in steam reforming and in the oxidative reforming of steam from liquid fuels, such as injection fuels, diesel and petrol, to product synthesis gas and/or hydrogen. The catalyst contains a very costly metal (Rh) and the process uses fossil fuels.

US 2004014600 A1 discloses a conventional hydrocarbon reforming process using a bimetal catalyst, which comprises at least one metal from the group of platinum and at least one other metal selected from cobalt and/or nickel, to obtain hydrogen and/or synthesis gas.

And another document, US 2006216227 A1, discloses nickel and/or copper catalysts on a cerium/zirconium support for the production of hydrogen using the displacement reaction of steam from water and another catalyst for reforming with carbon dioxide of fossil fuels that contain hydrocarbons.

Hydrogen production from steam reforming of bioethanol using Cu/Ni/K/γ-Al2O3 catalysts is described in the International Journal of Hydrogen Energy 26 (2001) 665-668.

### DESCRIPTION OF THE INVENTION

The present invention relates to processes for the oxidative reforming of alcohols catalysed by metal catalysts on an oxide support that can be carried out at temperatures lower than 500°C, further showing a high conversion index, but maintaining great selectivity in terms of product distribution. Preferably, the starting material used in the processes is glycerol.

Furthermore, another object of the present invention relates to specific catalysts that are useful for said processes. These catalysts show many advantages especially when they are used in oxidative reforming processes or in the synthesis of higher alcohols. For example, they are self-regenerating, they are based on non-noble metals and they do not require Pt so that excellent results are obtained. They use Ru, and it has been managed to decrease, in some specific embodiments, its content by at least 0.25% by weight, thus decreasing the cost of the catalyst. They are active at temperatures lower than 375°C. The catalysts of the invention can be continuously activated, which allows them to operate continuously barely observing deactivation phenomenon in the reaction times, which in some cases have been extended for several weeks. They are capable of regenerating themselves by continuous cycles of reaction/activation processes. They are stable working with reaction/reactivation cycles and they do not have significant deactivation in the time the tests last (450 hours). Furthermore, the catalysts of the invention comprise a metal M that is Co and/or Ni. The choice of metal M makes it possible to differentiate the products obtained. For example, the catalysts of the Co-Ru series at 375°C have a reagent conversion of 100% in the reaction conditions studied. The selectivity of H₂ (S(H₂)) is normally found in a range of between 40 and 45%, which represents a yield between 56 and 63% of hydrogen for these systems. In all cases, CO is normally generated (between 0.5 and 3% of selectivity). The catalysts of the Ni-Ru series at 375 °C have H₂ selectivity (S(H₂)) less than its homologues of the Co-Ru series, mainly due to the formation of methane, which allows choosing between catalysts that obtain gas with high H₂ content, or with high H₂ content but mixed with CH₄. They are capable of working with industrial raw materials, and, in particular, with surplus bioethanol and glycerol in biodiesel production. They can work directly with air instead of oxygen, thus avoiding the need for an additional air liquefaction plant to produce oxygen.

Therefore, the first aspect of the present invention is a process for the oxidative reforming of alcohols according to claim 1.

Another aspect of the present invention is a catalyst according to claim 6.

Finally, the catalysts show excellent behaviour in the reforming or synthesis processes of higher alcohols, for which reason a fourth aspect is the use of the catalysts for said processes.

### BRIEF DESCRIPTION OF THE FIGURES

The figures show, by graphic representation, the catalytic behaviour of different catalysts with the reaction time at a fixed temperature, or contemplating a hysteresis cycle to be able to analyse in greater detail the distribution profiles of the products obtained and the stability of these systems.

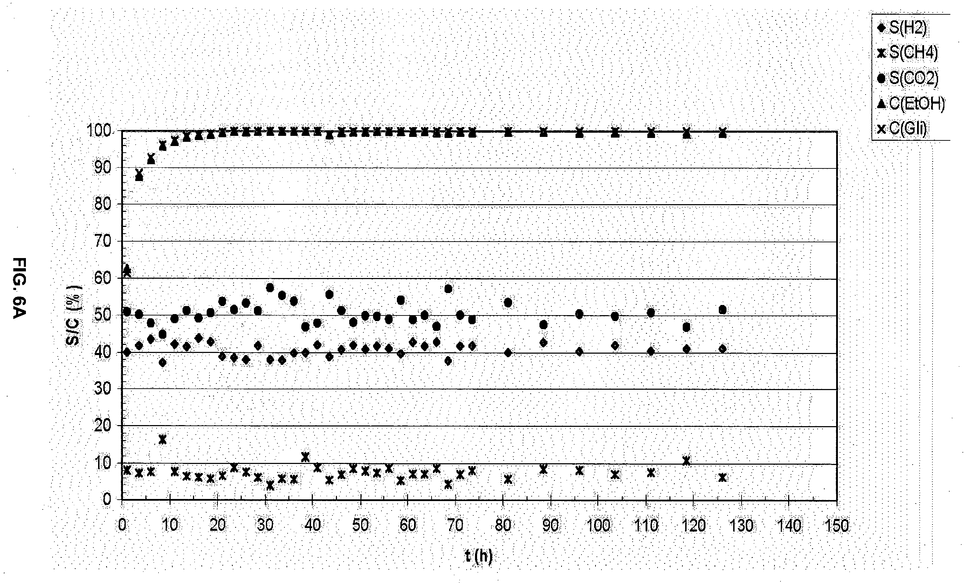

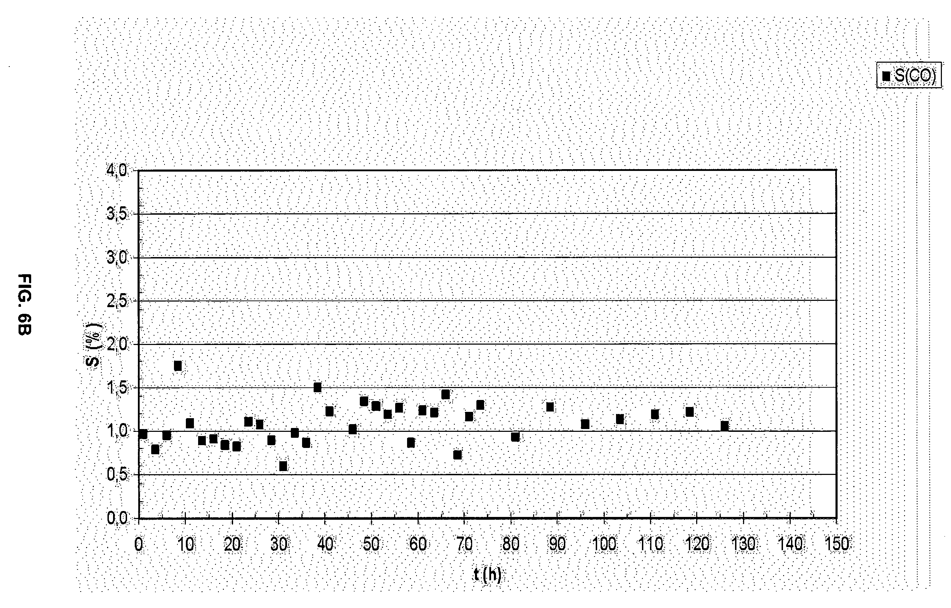

Figure 6 shows the catalytic behaviour of the catalyst Co8.84Ru0.25/CeO₂-ZrO₂ 1.19%K (Example 3) analysed during around 120h under the indicated reaction conditions. T = 375°C Liquid mixture A (alcohol/water (molar)= 1/4; S/C=2). Flow O₂ = 0.66 mL/min, flow He = 29.65 mL/min, flow of liquid mixture = 0.007 mL/min. Every 2h, activation period of 30 minutes under flow of O₂ = 10 mL/min and flow of He = 29.65 mL/min. Figure 6 a) shows the conversion and distribution values of majority products, and Figure 6 b), with greater detail, selectivity towards the CO by-product. It is possible to verify the high stability of the catalyst and the very low CO production.

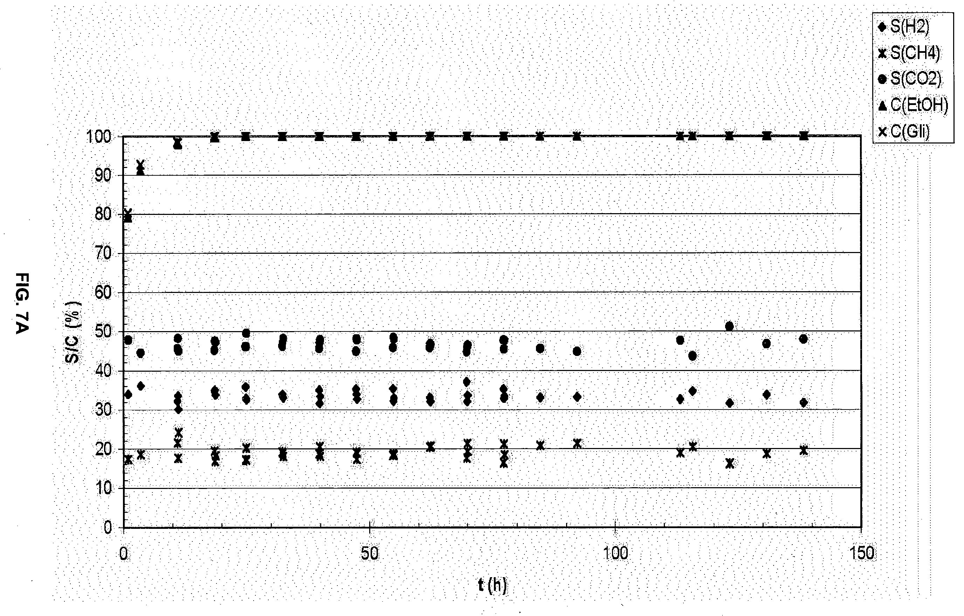

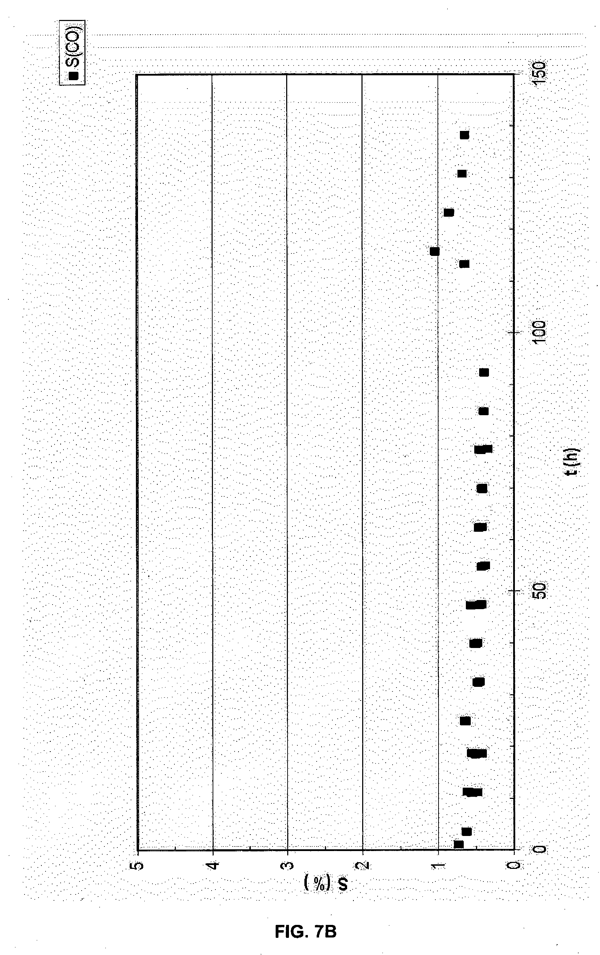

Figure 7 shows the results corresponding to analysis of the catalyst Ni6.99RuO.23/CeO₂-ZrO₂ 0.83% K (Example 8). It is possible to verify the high stability of the catalyst and the very low CO production. T = 375°C Liquid mixture A (alcohol/water (molar)= 1/4; S/C=2). Flow O₂ = 0.66 mL/min, flow He = 29.65 mL/min, flow of liquid mixture = 0.007 mL/min. Every 2h, activation period of 30 minutes under flow of O₂ = 10 mL/min and flow of He = 29.65 mL/min. a) conversion and selectivity data to majority products (H₂, CO₂, CH₄); b) selectivity data to CO; it is possible to verify the very low CO production.

### DETAILED DESCRIPTION OF THE INVENTION

To increase stability of the catalysts and avoid their deactivation, it is possible to introduce an alkaline metal selected from lithium (Li), sodium (Na), potassium (K), rubidium (Rb), caesium (Cs) and any of their combinations. This parameter has been verified in the laboratory studying the reproducibility of the catalytic behaviour depending on temperature by the use of hysteresis cycles in reaction, thus demonstrating the high stability of the catalysts.

The process shows excellent results and robustness even with catalysts which comprise low proportions of Ru, for which reason the catalyst preferably comprises between 0.005 and 1% by weight of Ru, more preferably between 0.01% and 0.5 %, and even more preferably between 0.025% and 0.20%. With respect to M, the content is between 4% and 10% by weight. The low content of transition metals, and in particular of Ru, is of vital importance for the process' economic feasibility. The catalyst comprises between 0.01% and 2% by weight Li, Na, K, Rb, Cs or any of their combinations, more preferably between 0.10% and 1.5% by weight.

The composition of the catalyst for its use in oxidative reforming processes is not limited to the aforementioned, instead it can comprise other metals, such as, for example, Copper (Cu). Copper enables a better initiation of the process compared with similar catalysts without copper. It further increases cycle reproducibility, stability and yield at low reaction times. The quantity of Cu is not limited in principle, but this preferably varies between 0.05 and 4% by weight of Cu, preferably between 0.1 and 1% by weight.

The catalysts of the invention make it possible to work in very gentle temperature conditions, which means a considerable energy saving. For example, the oxidative reforming stage can be carried out at a temperature lower than 500°C, preferably between 300 and 450°C, and more preferably between 350 and 400°C.

Other advantages associated to the invention is the starting proportion of steam/carbon (S/C), which may be lower than 6, and the S/C proportion can even be lower than 4. Despite using such low S/C ratios, surprisingly, C is not produced (carbon deposits), very little CO is produced and the S(H2) is very high. Furthermore, the quantity of water to be vaporized is less, with the subsequent lower energy cost. This also increases the ease of transport, as smaller sized container receptacles are needed.

The process is very versatile and robust, which means they are useful for the oxidative reforming of a multitude of alcohols. For example, the starting alcohols can be selected from glycerol, ethanol, ethylene glycol, propanol, isopropanol, butanol, isobutanol, butanediol and any of their combinations. The process even permits the oxidative reforming of raw industrial materials, and, particularly, with surplus bioethanol and glycerol from biodiesel production.

Another of the advantages associated to the present reaction is that the reaction can be carried out in a fixed bed reactor, which is a type of common reactor, easy-to-use, highly available in the industry.

As has been indicated, another aspect of the invention makes reference to catalysts useful in oxidative reforming processes. A characteristic of the catalysts of the invention is that the quantity of Ru can be reduced without loss of activity. For example, the catalysts of the invention comprise between 0.005 and 1% by weight of Ru, preferably between 0.01% and 0.5 %, and more preferably between 0.025% and 0.20%.

The catalysts of the Co-Ru series at 375 °C have a reagent conversion of 100% in the studied reaction conditions. The H₂ selectivity (S(H₂)) is found in a range between 40 and 45%, which represents a yield between 56% and 63% of hydrogen for these systems. Normally, CO is generated (between 0.5% and 3% of selectivity). Preferably, the Co content is found in a concentration of between 3% and 10% by weight compared to the total of the catalyst.

The catalysts of the Ni-Ru series at 375 °C have H₂ selectivity (S(H₂)) less than its homologues of the Co-Ru series, mainly due to methane formation, which makes it possible to choose between catalysts that obtain gas with high H₂ content or gas with high H₂ content mixed with CH₄. Preferably, the Ni is found in a concentration of between 3% and 10% by weight compared to the total of the catalyst.

The quantity of alkaline metal is usually low, between 0.01% and 2% by weight, even more preferably between 0.10% and 1.5%. In a particular embodiment it comprises between 0.80% and 1.20% by weight of Li, Na, K, Rb, Cs and any of their combinations. With respect to the preferred alkaline metals they are Na, K or any of their combinations, and the most preferred being K.

The oxide supports useful for this type of catalysts are known in the state of the art (Chemical Communications, 2001 (7) 641-642). The use of Al₂O₃, ZrO₂, CeO₂-ZrO₂, MgO-ZrO₂, zeolite, yttrium, zinc oxide, titanium, silica, lanthanum or mixtures of them is usual as oxide support. The most preferred are Al₂O₃, ZnO or CeO₂-ZrO₂. The best results have been obtained with CeO₂-ZrO₂. The quantity of oxide support may be greater than 50% by weight compared to the total of the catalyst, preferably it is at least 80% by weight.

As has already been mentioned, in the first aspect, the presence of other metals may improve the catalyst's properties. For example, in the case that the catalyst contains Cu, the copper enables a better initiation of the process compared to similar catalysts without copper. It also increases cycle reproducibility, stability and yield at low reaction times. The quantity of copper may vary between 0.05 and 4% by weight of Cu, preferably between 0.1 and 1 % by weight.

The catalysts of the present invention can be obtained by the processes known in the state of the art, for example by calcining of the impregnated oxide support with a compound, preferably a salt, which comprises Ru; a compound, preferably a salt, which comprises M; and a compound, preferably a salt, which comprises Li, Na, K, Rb, Cs and any of their combinations (Chemical Society Reviews, 37 (2008) 2459-2467). In the case of catalysts which comprise Cu, the process would be identical but with the difference that the oxide support would also be impregnated with a compound, preferably a salt, which comprises Cu. The impregnated oxide support is usually prepared by impregnation of one or several precursor solutions which comprise the metal compounds. A characteristic of the catalysts of the present invention is that they can be directly used after calcining without additional steps.

The compounds which contain Ru useful for the impregnation of the oxide support may be chloride, nitrate, acetate, nitrosyl-nitrate and carbonyls of Ru as referred to in Chemical Society Reviews, 37 (2008) 2459-2467.

The compounds which contain M useful for the impregnation of the oxide support may be chlorides, carbonates, acetates, nitrates and carbonyls, as found in the references indicated in Chemical Society Reviews, 37 (2008) 2459-2467.

The compounds which contain Li, Na, K, Cs or any of their combinations useful for the impregnation of the oxide support may be chlorides, nitrates, acetates and carbonates (see in Chemical Society Reviews, 37 (2008) 2459-2467).

The compounds which contain Cu useful for the impregnation of the oxide support are chloride, nitrate, acetate and carbonate.

The impregnated oxide support can be calcined at a temperature between 150 and 700°C (Chemical Society Reviews, 37 (2008) 2459-2467). Preferably the calcining temperature is between 300 and 600°C.

In a preferred embodiment, the catalyst is reduced. The reduction method may consist of an H₂/Ar current, it being possible that H₂ is pure, at a temperature between 200-500°C. Preferably, in said method the H₂:Ar proportion may vary between 1:0 and 1:100, preferably it is 1:2. Preferably, the reduction takes place at a temperature between 350 and 450°C.

The catalysts can be passivated to improve their handling, but without losing activity. The passivation can be carried out with an O₂ current between 0.5 and 2 bars, preferably between 0 and 50°C. This process can also be carried out with a very diluted current of 0.5-10% by volume of O₂ in an inert gas (e.g. Ar), this being a usual process to facilitate the handling and supply of commercial catalysts.

The preferred embodiments of the second aspect would also be equally valid for the third aspect of the present invention.

As has already been commented, the catalysts of the invention are very effective in the oxidative reforming of alcohols, in particular water/ethanol/glycerol mixtures:

1) C₂H₅OH + 2H₂O + 1/2O₂ → 5H₂ + 2CO₂

2) C₃H₈O₃ + 2H₂O + 1/2O₂ → 6H₂ + 3CO₂

The catalysts of the invention are also useful for the oxidative reforming of sugars, alcohols or of their mixtures with water. The catalysts of the invention, of the second and third aspects, are also evidently useful for the processes of the first aspect.

Persons skilled in the art will appreciate that the present invention can be carried out within a wide margin of equivalent parameters, concentrations and conditions without departing from the spirit and scope of the invention and without undue experimentations. Although the invention has been described in relation to said embodiments, it is understood that it may be subject to additional modifications. This document aims to cover any variant, use or adaptation of the invention following the general principles of same and including the variants from the present disclosure, as provided by the known or customary practices of the technical field to which the invention belongs.

### EXAMPLES

The following examples are presented as an additional guide for the average person skilled in the art and in no case should they be considered a limitation of the invention.

### A.- Preparation of the catalyst:

### EXAMPLE A1

To prepare a supported catalyst of Co and Ru with K, 0.038 g of RuCl₃·H₂O are weighed of the commercial salt which contains 35-40% of Ru, 1.974 g of Co(NO₃)₂·6H₂O and 0.134 g of KNO₃ and they are dissolved 3 mL of H₂O. On the other hand, 5.005 g of CeO₂-ZrO₂ are weighed which are impregnated with the previous solution. Then, the damp solid is dried in the oven at 100 °C for 24h. Next, the dry solid is calcined at 400 °C for 6h. It is then reduced under an H₂/Ar (1:2 v/v) 400 °C flow for 4h. The reduced catalyst can be passivated by treatment at ambient temperature for 1.5 h with an Air/Ar current with a percentage by volume of oxygen of 1.7%.

### EXAMPLE A2

In another case, a supported catalyst of Ni, Ru and Cu with K is prepared by impregnation of 5.006 g of CeO₂-ZrO₂ with 3mL of a recently prepared aqueous solution which contains 0.037g of RuCl₃·H₂O of the commercial salt which contains 35-40% Ru, 1.987g of Ni(NO₃)₂·6H₂O, 0.129g of KNO₃ and 0.047g of Cu(NO₃)_{2·}3H₂O. The drying, calcining and reducing treatments were exactly the same as those indicated in the other example. The passivation treatment in this case was carried out for 1.5 h at ambient temperature with an air current in Ar which contained 1.9% by volume of oxygen.

The chemical analysis of the prepared solid is carried out by inductive plasma coupling of a solution obtained after performing the necessary analytical treatments. The analysis methods, although known, have been adapted to the catalysts developed in the present invention. It is necessary to analyse the catalysts synthesized to check that the synthesis has correctly taken place. The characterization of the catalysts can be carried out conventionally as described (Journal of Catalysis 209 (2002) 306-317).

Table 1 indicates the chemical composition for the different examples presented, expressed as the percentages by weight of different elements forming the catalyst, the rest up to 100% corresponding to the support (CeO₂-ZrO₂).

### Support of the catalysts

The support selected for preparation of the catalysts is a CeO₂-ZrO₂, which is one wherein the catalyst showed good qualities. In particular, a commercial support from the company MEL CHEMICALS, the CeO₂-ZrO₂ MELCAT XZO 802/1 (Ref.: 00/114/085KIA) was used.

### B.- Oxidative reforming of Glycerol.

Next, a detailed practical example of how the oxidative reforming can be carried out is detailed below.

### Parameters and general reaction conditions

The reforming reaction tests have been carried out in a commercial "microactivity reference" apparatus (PID Eng. & Tech. S.L.), at atmospheric pressure and at the temperature range of 350 °C to 500 °C. The system consists of a tubular fixed bed reactor (305 mm long, 9 mm internal diameter) from HASTELLOY C-276 (Autoclave Engineers), heated with external electric oven. The catalyst, reduced and passivated as has been indicated in the preparative examples, is placed in the reactor in direct contact with a thermocouple for measuring the temperature in the catalytic bed. In the tests, between 50 and 500 mg of catalyst was used, preferably between 100 and 250mg. The catalytic bed is typically taken to a volume of 0.5 mL using silicon carbide for this as inert dispersion element. The gas flows are introduced by mass flow meters-controllers. Before starting the reaction, the reactor temperature is taken to the initial desired value under a current of inert gas (He, it can also be another, for example, argon). The gases used in the process are O₂ and He, which is used as inert gas, although Ar or N₂ can also be used as inert gases. Another alternative is the use of just air, which already includes N₂. The mixture of liquid is formed by water, and a mixture of glycerol and ethanol, with different proportions of constituents. The mixture of alcohols preferably contains between 4% and 5% by weight of glycerol and the total liquid mixture, typically between 30% and 45% by volume of ethanol. The experiments have been performed with (steam/carbon, S/C) ratios of 2 or 3, for which the H₂O/alcohol molar ratios are 4 or 6 respectively. The liquid mixture is introduced by a flow piston pump of between 0.003 and 0.03 mL min⁻¹ and it is vaporized and mixed with the gas before entering the reactor. In the experiments performed, the molar ratio of total alcohol in the mixture to oxygen has also been kept at 2 and the spatial rate in any case around 4500 h⁻¹. The effluent is continually analysed by gas chromatography and the resulting liquids, if required, by liquid chromatography (HPLC). The glycerol and ethanol conversion was calculated by its determination before and after the reaction and is expressed as a percentage of each alcohol consumed in the reaction. Under the conditions used, most experiments entail conversions of the mixture of alcohol of 100%. The selectivity values to each product in the effluent were calculated as the molar percentage of each product in the total, with the exception of water. Under the conditions used, the maximum possible value to reach selectivity towards hydrogen is close to 71%. The regeneration process is carried out sequentially, without stopping the system, after every 2 hours under reaction. For said purpose, the liquid supply is stopped and only the gas flow is left He(inert)/O₂ or air) for 30 minutes.

### Liquid mixtures of the reagents

### - Liquid mixture A

With a molar ratio of total alcohol/H₂O of 1/4. Maintaining a total Steam/Carbon ratio of 2 and a percentage by weight of glycerol of 4.3% in the alcohol mixture. For this molar ratio, the composition of the liquid supply of the reaction is 1.65% (w/w) of glycerol, 37.19% (w/w) of ethanol and 61.16% (w/w) of H₂O.

### - Liquid mixture B

With a molar ratio of total alcohol/H₂O of 1/6. Maintaining a total Steam/Carbon ratio of 3 and a percentage by weight of glycerol of 4.3% in the alcohol mixture. For this molar ratio, the composition of the liquid supply of the reaction is 1.28% (w/w) of glycerol, 28.84% (w/w) of ethanol and 69.88% (w/w) of H₂O.

The glycerol is provided by UPS-grade Acciona Biofuels. The ethanol is absolute HPLC-grade, as with the H₂O or supplied by Acciona Biofuels from a bioethenol plant.

The different examples are given in Table 1, giving a summary of the behaviour of a total of 23 catalysts with different compositions. Each-example indicates, aside from some reaction parameters, such as temperature and the liquid reaction mixture used, the conversion data of alcohol and product distribution, expressed as selectivity to the different products of interest. The data compiled here correspond to the average values determined after several analyses at a determined temperature, and also including the determined values in the hysteresis cycle. In all cases, the variations in selectivity values observed are less than 10% of the final value expressed in Table 1. When the alcohol conversion values do not reach 100%, other majority by-products are obtained such as acetaldehyde, acetone, ethylene (which do not appear in the table) whose quantities complete in these cases the values of 100% in the product distribution. At the foot of the table, some relevant aspects to be considered for each example are mentioned. Finally, we should indicate that with the equipment used, the CO analysis has a detection limit of around 50 ppm. The selectivity values in this case are given with a degree of certainty of ± 0.5% within the indicated range of values.

### Catalytic assays

**Table 1**

| Ex. | Catalyst composition | | | | Cat. mass (mg) | T (°C) | React¹ Mix. | Conv. (%) | Selectivities² (%) | | | | |
|---|---|---|---|---|---|---|---|---|---|---|---|---|---|
| | Ru (%) | Co (%) | Ni (%) | K (%) | | | | | H₂ | CO | CH₄ | CO₂ | |
| 1c | 3.25 | 8.30 | - | 0.92 | 102 | 375 | A | 100 | 40 | 1-2 | 14 | 45 | |
| 2 | 0.71 | 8.52 | - | 1.10 | 103 | 375 | A | 100 | 40 | 1-2 | 9 | 50 | |
| 3 | 0.25 | 8.84 | - | 1.19 | 105 | 375 | A | 100 | 40 | 1-2 | 9 | 50 | |
| 4 | 0.08 | 8.66 | - | 1.06 | 100 | 375 | A | 85* | 42 | 2-3 | 10 | 44 | |
| 5 | 0.21 | 6.87 | - | 0.15 | 107 | 375 | A | 70* | 40 | 3-4 | 4 | 50 | |
| 6 | 1.42 | - | 6.41 | 0.81 | 104 | 375 | A | 100 | 30 | 0-1 | 20 | 50 | |
| 7 | 0.50 | - | 6.71 | 0.87 | 100 | 375 | A | 100 | 35 | 0-1 | 20 | 45 | |
| 8 | 0.23 | - | 6.99 | 0.83 | 105 | 375 | A | 100 | 33 | 0-1 | 20 | 46 | |
| 9 | 0.08 | - | 6.63 | 0.78 | 108 | 375 | A | 100 | 35 | 0-1 | 20 | 45 | |
| 10 | 0.08 | 8.66 | - | 1.06 | 150 | 375 | A | 95* | 45 | 1-2 | 5 | 47 | |
| 11 | 0.21 | 6.87 | - | 0.15 | 253 | 375 | A | 100 | 43 | 2-3 | 10 | 45 | |
| 12 | 0.08 | - | 6.63 | 0.78 | 121 | 375 | A | 100 | 35 | 0-1 | 25 | 40 | |
| | | | | | | 400 | A | 100 | 40 | 1-2 | 19 | 40 | |
| | | | | | | 450 | A | 100 | 45 | 2-3 | 8 | 45 | |
| | | | | | | 500 | A | 100 | 48 | 5-6 | 5 | 42 | |
| 13 | 0.08 | - | 6.63 | 0.78 | 121 | 375 | B | 100 | 40 | 0-1 | 12 | 48 | |
| | | | | | | 400 | B | 100 | 40 | 0-1 | 10 | 50 | |
| | | | | | | 450 | B | 100 | 45 | 1-2 | 9 | 45 | |
| | | | | | | 500 | B | 100 | 50 | 3-4 | 2 | 45 | |
| 14 | 0.08 | 8.66 | - | 1.06 | 250 | 350 | B | 90* | 45 | 1-2 | 5 | 46 | |
| | | | | | | 375 | B | 100 | 47 | 1-2 | 4 | 48 | |
| | | | | | | 400 | B | 100 | 50 | 1-2 | 4 | 45 | |
| | | | | | | 450 | B | 100 | 48 | 2-3 | 5 | 45 | |
| | | | | | | 500 | B | 100 | 50 | 2-3 | 3 | 45 | |
| 15c | - | 6.73 | - | 0.90 | 104 | 375 | A | 55* | 30 | 1-2 | 1 | 60 | |
| 16c | - | - | 6.98 | 0.93 | 107 | 375 | A | 45* | 35 | 2-3 | 1 | 55 | |
| 17cⁱ | 0.26 | - | - | 0.86 | | 263 | 450 | B | 100 | 59 | 1-2 | 9 | 31 |
| | | | | | | | 500 | B | 100 | 62 | 3-4 | 6 | 29 |
| 18 | 0.06 | 3.45 | 3.20 | 0.90 | | 260 | 375 | B | 100 | 58 | 1-2 | 10 | 31 |
| | | | | | | | 400 | B | 100 | 59 | 1-2 | 9 | 31 |
| | | | | | | | 450 | B | 100 | 59 | 1-2 | 9 | 31 |
| 19cⁱⁱ | 0.05 | - | 6.24 | - | | 260 | 375 | B | 100 | 45 | 0-1 | 20 | 35 |
| | | | | | | | 400 | B | 100 | 48 | 1-2 | 19 | 32 |
| | | | | | | | 450 | B | 100 | 56 | 1-2 | 12 | 31 |
| | | | | | | | 500 | B | 100 | 62 | 3-4 | 7 | 28 |
| 20 | 0.07 | - | 7.11 | 0.84 | 0.25 | 203 | 375 | B | 100 | 42 | 0-1 | 19 | 39 |
| | | | | | | | 400 | B | 100 | 44 | 1-2 | 17 | 38 |
| | | | | | | | 450 | B | 100 | 52 | 1-2 | 12 | 35 |
| | | | | | | | 500 | B | 100 | 58 | 3-4 | 7 | 32 |
| 21 | 0.20 | 7.33 | - | 0.85 | 0.24 | 207 | 400 | B | 100 | 45 | 1-2 | 19 | 35 |
| | | | | | | | 450 | B | 100 | 55 | 1-2 | 10 | 34 |
| | | | | | | | 500 | B | 100 | 58 | 3-4 | 6 | 33 |
| 22ⁱⁱⁱ | 0.04 | 3.43 | 3.21 | 0.86 | 0.26 | 263 | 400 | B | 100 | 54 | 0-1 | 11 | 35 |
| | | | | | | | 450 | B | 100 | 59 | 1-2 | 8 | 32 |
| | | | | | | | 500 | B | 100 | 63 | 3-4 | 6 | 28 |
| 23c^{iv} | | 3.49 | 3.23 | 0.79 | | 264 | 450 | B | 100 | 58 | 2-3 | 6 | 34 |
| | | | | | | | 500 | B | 100 | 60 | 4-5 | 4 | 32 |

| | | | | | | | | | | | | | |
|---|---|---|---|---|---|---|---|---|---|---|---|---|---|
| 1) A: alcohol/water reaction mixture= 1/4 (molar), S/C= 2; B: alcohol/water reaction mixture=1/6 (molar), S/C=3. 2) The CO selectivity values are in the ranges indicated with a degree of certainly of ±0.5% (*) The by-products such as acetaldehyde, acetone, ethylene (not indicated) appear in these cases (incomplete alcohol conversion) in variable quantities until completing 100% in product distribution obtained. ⁱThis catalyst is not active until exceeding 400°C, further suffering deactivation. "The lack of potassium in this catalyst means that the hysteresis cycles are not as reproducible; the values presented here are the average of the entire cycle. Finally, this catalyst is deactivated. ⁱⁱⁱ this multicomponent catalyst (Co and Ni) containing Cu produces a catalyst with a better initiation in the process when it is compared with the catalyst of example 18 (we should indicate that the 375 °C data have not been given, as in the cycle, on the turn, the conversion was not total at that temperature, or, in other words, deactivation occurred) therefore, better initiation but only operative with high stability up to 400 °C. ^{iv}this catalyst does not show total conversion until 450°C; Examples 1 c, 15c, 16c, 17c, 19c and 23c are comparative examples and not within the scope of protection. | | | | | | | | | | | | | |

## Claims

1. A process for the oxidative reforming of alcohols, **characterized in that** it comprises a catalyst which comprises: an oxide support; between 0.001% and 3% by weight of ruthenium (Ru), between 4% and 10% by weight of a metal M, M being a metal selected from cobalt (Co), nickel (Ni) and any of their combinations, and between 0.01% and 2% by weight of lithium (Li), sodium (Na), potassium (K), rubidium (Rb), cesium (Cs) or any of their combinations.

2. The process according to any of the previous claims, **characterized in that** the catalyst comprises between 0.005 and 1% by weight of Ru, preferably between 0.01% and 0.5 %, and more preferably between 0.025% and 0.20%.

3. The process according to any of the previous claims, **characterized in that** the catalyst comprises between 0.10% and 1.5% by weight of Li, Na, K, Rb, Cs or any of their combinations.

4. The process according to any of the previous claims, **characterized in that** the catalyst comprises Copper (Cu), preferably between 0.05 and 4% by weight of Cu, more preferably between 0.1 and 1% by weight.

5. The process according to any of the previous claims, **characterized in that** the alcohols are selected from glycerol, ethanol, ethylene glycol, propanol, isopropanol, butanol, isobutanol, butanediol and any of their combinations.

6. A catalyst which comprises an oxide support; between 0.001% and 3% by weight of ruthenium (Ru); less than 30% by weight of a metal M, M being a metal selected from cobalt (Co), nickel (Ni) and any of their combinations; where the Co content is found in a concentration of between 3% and 10% by weight compared to the total of the catalyst and/or where the Ni content is found in a concentration of between 3% and 10% by weight compared to the total of the catalyst; and between 0.01% and 2% by weight of alkaline metal selected from lithium (Li), sodium (Na), potassium (K), rubidium (Rb), caesium (Cs) and any of their combinations; wherein the oxide support is CeO₂-ZrO₂.

7. The catalyst according to the preceding claim, **characterized in that** it comprises between 0.005 and 1% by weight of Ru, preferably between 0.01% and 0.5 %, and more preferably between 0.025% and 0.20%.

8. The catalyst according to any of claims 6 to 7, **characterized in that** it comprises between 0.10% and 1.5% by weight of Li, Na, K, Rb, Cs or any of their combinations..

9. The catalyst according to any of claims 6 to 8, **characterized in that** it comprises Na, K or any of their combinations, it preferably comprises K

10. The catalyst according to any of claims 6 to 9, **characterized in that** it comprises Cu, preferably between 0.05 and 4% by weight of Cu, more preferably between 0.1 and 1% by weight.

11. The catalyst according to any of claims 6 to 10, **characterized in that** it comprises: between 0.005 and 1% of Ru; between 4% and 10% of M; I between 0.01% and 2% by weight of at least one alkaline metal selected from Li, Na, K, Rb, Cs and any of their combinations; and is supported on CeO₂-ZrO₂.

12. The catalyst according to any of claims 6 to 11, **characterized in that**: it is supported on CeO₂-ZrO₂; and comprises between 0.005% and 1% of Ru; between 4% and 10% of M; and between 0.01 % and 2% by weight of at least one alkaline metal selected from Li, Na, K, Rb, Cs and any of their combinations.

13. The catalyst according to any of claims 6 to 12, **characterized in that** it comprises: between 0.005% and 1% of Ru; between 4% and 10% of M; between 0.01% and 2% by weight of at least one alkaline metal selected from Li, Na, K, Rb, Cs and any of their combinations; between 0.05 and 4% of Cu; and is supported on CeO₂-ZrO₂.

14. The catalyst according to any of claims 6 to 13, **characterized in that** it comprises between 0.025% and 0.50% of Ru; less than 30% of M; between 0.01% and 2% by weight of at least one alkaline metal selected from Li, Na, K, Rb, Cs and any of their combinations; and at least 50% of oxide support.

15. Use of the catalyst described according to any of the claims 6 to 14 in a reforming or synthesis process of higher alcohols, preferably oxidative reforming.

16. The use according to the preceding claim for the oxidative reforming of sugars, alcohols or of their mixtures with water.

## Patentansprüche

1. Verfahren zur oxidativen Reformierung von Alkoholen, **dadurch gekennzeichnet, dass** es einen Katalysator umfasst, der einen Oxidträger, zwischen 0,001 Gew.-% und 3 Gew.-% Ruthenium (Ru), zwischen 4 Gew.-% und 10 Gew.-% eines Metalls M, wobei M ein aus Kobalt (Co), Nickel (Ni) und deren Kombinationen ausgewähltes Metall ist, und zwischen 0,01 Gew.-% und 2 Gew.-% Lithium (Li), Natrium (Na), Kalium (K), Rubidium (Rb), Cäsium (Cs) oder deren Kombinationen umfasst.

2. Verfahren nach einem der vorhergehenden Ansprüche, **dadurch gekennzeichnet, dass** der Katalysator zwischen 0,005 und 1 Gew.-%, vorzugsweise zwischen 0,01 Gew.-% und 0,5 Gew.-% und besonders bevorzugt zwischen 0,025 Gew.-% und 0,20 Gew.-% Ru umfasst.

3. Verfahren nach einem der vorhergehenden Ansprüche, **dadurch gekennzeichnet, dass** der Katalysator zwischen 0,10 Gew.-% und 1,5 Gew.-% Li, Na, K, Rb, Cs oder deren Kombinationen umfasst.

4. Verfahren nach einem der vorhergehenden Ansprüche, **dadurch gekennzeichnet, dass** der Katalysator Kupfer (Cu), vorzugsweise zwischen 0,05 und 4 Gew.-%, besonders bevorzugt zwischen 0,1 und 1 Gew.-% Cu umfasst.

5. Verfahren nach einem der vorhergehenden Ansprüche, **dadurch gekennzeichnet, dass** die Alkohole aus Glycerin, Ethanol, Ethylenglykol, Propanol, Isopropanol, Butanol, Isobutanol, Butandiol und deren Kombinationen ausgewählt werden.

6. Katalysator, der einen Oxidträger, zwischen 0,001 Gew.-% und 3 Gew.-% Ruthenium (Ru), weniger als 30 Gew.-% eines Metalls M, wobei M ein aus Kobalt (Co), Nickel (Ni) und deren Kombinationen ausgewähltes Metall ist; wobei der Co-Gehalt in einer Konzentration von 3 Gew.-% bis 10 Gew.-% in Bezug auf den Gesamtkatalysator vorliegt und/oder wobei der Ni-Gehalt in einer Konzentration von 3 Gew.-% bis 10 Gew.-% in Bezug auf den Gesamtkatalysator vorliegt; und zwischen 0,01 Gew.-% und 2 Gew.-% eines Alkalimetalls, ausgewählt aus Lithium (Li), Natrium (Na), Kalium (K), Rubidium (Rb), Cäsium (Cs) und deren Kombinationen, umfasst; wobei der Oxidträger CeO2-ZrO₂ ist.

7. Katalysator nach dem vorhergehenden Anspruch, **dadurch gekennzeichnet, dass** er zwischen 0,005 und 1 Gew.-%, vorzugsweise zwischen 0,01 Gew.-% und 0,5 Gew.-% und besonders bevorzugt zwischen 0,025 Gew.-% und 0,20 Gew.-% Ru umfasst.

8. Katalysator nach einem der Ansprüche 6 bis 7, **dadurch gekennzeichnet, dass** er zwischen 0,10 Gew.-% und 1,5 Gew.-% Li, Na, K, Rb, Cs oder deren Kombinationen umfasst.

9. Katalysator nach einem der Ansprüche 6 bis 8, **dadurch gekennzeichnet, dass** er Na, K oder deren Kombinationen, vorzugsweise K, umfasst.

10. Katalysator nach einem der Ansprüche 6 bis 9, **dadurch gekennzeichnet, dass** er Cu, vorzugsweise zwischen 0,05 und 4 Gew.-%, besonders bevorzugt zwischen 0,1 und 1 Gew.-% Cu umfasst.

11. Katalysator nach einem der Ansprüche 6 bis 10, **dadurch gekennzeichnet, dass** er zwischen 0,005 und 1 Gew.-% Ru, zwischen 4 Gew.-% und 10 Gew.-% M und zwischen 0,01 Gew.-% und 2 Gew.-% mindestens eines Alkalimetalls, ausgewählt aus Li, Na, K, Rb, Cs und deren Kombinationen, umfasst und auf CeO₂-ZrO₂ geträgert ist.

12. Katalysator nach einem der Ansprüche 6 bis 11, **dadurch gekennzeichnet, dass** er auf CeO₂-ZrO₂ geträgert ist und zwischen 0,005 % und 1 % Ru, zwischen 4 % und 10 % M und zwischen 0,01 Gew.-% und 2 Gew.-% mindestens eines Alkalimetalls, ausgewählt aus Li, Na, K, Rb, Cs und deren Kombinationen, umfasst.

13. Katalysator nach einem der Ansprüche 6 bis 12, **dadurch gekennzeichnet, dass** er zwischen 0,005 % und 1 % Ru, zwischen 4 % und 10 % M, zwischen 0,01 Gew.-% und 2 Gew.-% mindestens eines Alkalimetalls, ausgewählt aus Li, Na, K, Rb, Cs und deren Kombinationen, und zwischen 0,05 und 4 % Cu umfasst und auf CeO₂-ZrO₂ geträgert ist.

14. Katalysator nach einem der Ansprüche 6 bis 13, **dadurch gekennzeichnet, dass** er zwischen 0,025 % und 0,50 % Ru, weniger als 30 % M, zwischen 0,01 Gew.-% und 2 Gew.-% mindestens eines Alkalimetalls, ausgewählt aus Li, Na, K, Rb, Cs und deren Kombinationen, und mindestens 50 % des Oxidträgers umfasst.

15. Verwendung des in einem der Ansprüche 6 bis 14 beschriebenen Katalysators in einem Reformierungs- oder Syntheseprozess höherer Alkohole, vorzugsweise in einer oxidativen Reformierung.

16. Verwendung nach dem vorhergehenden Anspruch zur oxidativen Reformierung von Zuckern, Alkoholen oder deren Mischungen mit Wasser.

## Revendications

1. Procédé de reformage oxydatif d'alcools, **caractérisé en ce qu'**il comprend un catalyseur qui inclut : un support à base d'oxyde ; entre 0.001% et 3% en poids de ruthénium (Ru), entre 4% et 10% en poids d'un métal M, M étant un métal sélectionné parmi le cobalt (Co), le nickel (Ni) et l'une quelconque de leurs combinaisons, et entre 0.01% et 2% en poids de lithium (Li), sodium (Na), potassium (K), rubidium (Rb), césium (Cs) et l'une quelconque de leurs combinaisons.

2. Procédé selon l'une quelconque des revendications précédentes, **caractérisé en ce que** le catalyseur comprend entre 0.005 et 1% en poids de Ru, de préférence entre 0.01 % et 0.5%, et plus préférablement entre 0.025% et 0.20%.

3. Procédé selon l'une quelconque des revendications précédentes, **caractérisé en ce que** le catalyseur comprend entre 0.10% et 1.5% en poids de Li, Na, K, Rb, Cs ou de l'une quelconque de leurs combinaisons.

4. Procédé selon l'une quelconque des revendications précédentes, **caractérisé en ce que** le catalyseur comprend du cuivre (Cu), de préférence entre 0.05% et 4% en poids de Cu, plus préférablement entre 0.1% et 1% en poids.

5. Procédé selon l'une quelconque des revendications précédentes, **caractérisé en ce que** les alcools sont sélectionnés parmi le glycérol, l'éthanol, l'éthylène glycol, le propanol, l'isopropanol, le butanol, l'isobutanol, le butanediol et l'une quelconque de leurs combinaisons.

6. Un catalyseur qui comprend un support à base d'oxyde ; entre 0.001 % et 3% en poids de ruthénium (Ru) ; moins de 30% en poids d'un métal M, M étant un métal sélectionné parmi le cobalt (Co), le nickel (Ni) et l'une quelconque de leurs combinaisons ; où le contenu de Co est présent dans une concentration comprise entre 3 et 10% en poids par rapport au total du catalyseur et/où le contenu de Ni est présent dans une concentration comprise entre 3 et 10% en poids par rapport au total du catalyseur ; et entre 0.01 et 2% en poids de métal alcalin sélectionné parmi le lithium (Li), le sodium (Na), le potassium (K), le rubidium (Rb), le césium (Cs) et l'une quelconque de leurs combinaisons ; dans lequel le support à base d'oxyde est CeO₂-ZrO₂.

7. Catalyseur selon la revendication précédente, **caractérisé en ce qu'**il comprend entre 0.005 et 1% en poids de Ru, de préférence entre 0.01 % et 0.5%, et plus préférablement entre 0.025% et 0.20%.

8. Catalyseur selon l'une quelconque des revendications 6 à 7, **caractérisé en ce qu'**il comprend entre 0.10% et 1.5% en poids de Li, Na, K, Rb, Cs ou de l'une quelconque de leurs combinaisons.

9. Catalyseur selon l'une quelconque des revendications 6 à 8, **caractérisé en ce qu'**il comprend Na, K ou l'une quelconque de leurs combinaisons, de préférence K.

10. Catalyseur selon l'une quelconque des revendications 6 à 9, **caractérisé en ce qu'**il comprend du Cu, de préférence entre 0.05% et 4% en poids de Cu, plus préférablement entre 0.1 % et 1% en poids.

11. Catalyseur selon l'une quelconque des revendications 6 à 10, **caractérisé en ce qu'**il comprend entre 0.005 et 1% de Ru ; entre 4% et 10% de M ; entre 0.01% et 2% en poids d'au moins un métal alcalin sélectionné parmi Li, Na, K, Rb, Cs et l'une quelconque de leurs combinaisons ; et **en ce qu'**il est supporté sur CeO2-ZrO₂.

12. Catalyseur selon l'une quelconque des revendications 6 à 11, **caractérisé en ce qu'**il est supporté sur CeO₂-ZrO₂, et il comprend entre 0.005% et 1% de Ru ; entre 4% et 10% de M ; et entre 0.01% et 2% en poids d'au moins un métal alcalin sélectionné parmi Li, Na, K, Rb, Cs et l'une quelconque de leurs combinaisons.

13. Catalyseur selon l'une quelconque des revendications 6 à 12, **caractérisé en ce qu'**il comprend : entre 0.005% et 1% de Ru ; entre 4% et 10% de M ; entre 0.01% et 2% en poids d'au moins un métal alcalin sélectionné parmi Li, Na, K, Rb, Cs et l'une quelconque de leurs combinaisons ; entre 0.05% et 4% en poids de Cu ; et **en ce qu'**il est supporté sur CeO₂-ZrO₂.

14. Catalyseur selon l'une quelconque des revendications 6 à 13, **caractérisé en ce qu'**il comprend entre 0.025% et 0.50% de Ru ; moins de 30% de M ; entre 0.01% et 2% en poids d'au moins un métal alcalin sélectionné parmi Li, Na, K, Rb, Cs et l'une quelconque de leurs combinaisons ; et au moins 50% de support à base d'oxyde.

15. Utilisation du catalyseur comme décrit dans l'une quelconque des revendications 6 à 14 dans un procédé de reformage ou de synthèse des alcools supérieurs, de préférence un procédé de reformage oxydatif.

16. Utilisation selon les revendications précédentes pour le reformage oxydatif de sucres, alcools ou de leurs mélanges avec de l'eau.
